# EUROPEAN PATENT SPECIFICATION

(11) **EP 2 025 418 B1**
(45) Date of publication and mention of the grant of the patent: **08.06.2011**
(21) Application number: 08013700.3
(22) Date of filing: 30.07.2008
(51) Int. Cl.: B01L 99/00

(54) **Automatic analyzer with pipette cleaning**
Automatisches Analysegerät mit Pipettenreinigung
Analyseur automatique avec un lavage des pipettes

(30) Priority: 09.08.2007 JP 2007207343
(43) Date of publication of application: 18.02.2009
(73) Proprietor: Hitachi High-Technologies Corporation, Minato-ku Tokyo 105-8717 (JP)
(72) Inventor: Maeda, Kohshi, Hitachinaka-shi, Ibaraki 312-8504 (JP); Komatsu, Hidenobu, Hitachinaka-shi, Ibaraki 312-8504 (JP); Soma, Kunihiko, Hitachinaka-shi, Ibaraki 312-8504 (JP); Ishizawa, Hiroaki, Hitachinaka-shi, Ibaraki 312-8504 (JP); Fukuzono, Shinichi, Hitachinaka-shi, Ibaraki 312-8504 (JP)
(74) Representative: Strehl Schübel-Hopf & Partner

(56) References cited:
- EP-A- 0 103 268
- EP-A- 0 725 279
- JP-A- 62 242 858
- JP-A- 2005 241 442

## Description

### BACKGROUND OF THE INVENTION

### 1. Field of the Invention

The present invention relates to an automatic analyzer for performing qualitative and quantitative analyses of biological samples such as blood and urine, and more particularly to an automatic analyzer equipped with pipetting probes for isolating prescribed amount of samples to be examined or reagents, and with mechanisms for washing the pipetting probes.

### 2. Description of the Related Art

An automatic analyzer for use in hospital laboratories and the like has a probe for pipetting samples and a probe for pipetting reagents. The automatic analyzer pepets samples to be examined or reagents to reaction cells with these probes to make them react and then measures the quantity of materials to be measured, or the density and activity of enzymes in the samples. The measurement is carried out by measuring the color change caused by the reaction on the basis of absorbance. It is indispensable for these probes to be washed in the inside and outside every time samples to be examined or reagents are changed in order to prevent contamination between samples to be examined or carry-over between reagents.

In an attempt to meet such necessity, automatic analyzers in the past were provided with a washing tub between sample containers and a reaction disk, or between reagent containers and a reaction disk. The washing tub is so constructed and arranged as to store washing water or produce a running water state. A pipetting probe is washed in the tub with every pipetting operation through its insertion in the tub and immersion in running water. In recent years, in addition to a wash by running water, there is devised such a method as is described in JP-A No. 2002-340913 (Patent Document 1). In the method, a washing tub is provided with a suction mechanism to effectively remove droplets of washing water remained on the tip of a pipetting probe by suction force as well as strengthening washing power to the probe.

Patent Document 1: JP-A No.2002-340913

Automatic analyzers in the past were designed to pour washing water on the tip of a pipetting probe, thereby letting a natural flow of the water wash away samples or reagents adhered to the outside of the probe. Such washing mechanism, however, lacked washing power strong enough to remove firmly adhered substances without a residue or could not wash thoroughly away samples or reagents splashed around the probe, resulting in a risk of carry-over.

Another problem is that, while such art as is disclosed in the patent document 1 may remove droplets of washing water remained on the tip of a probe during the washing process, it fails to remove droplets of reagents adhered to the tip of a probe when the probe pipettes reagents for want of washing process. If a sample examination should be performed with droplets of reagents or samples as well as washing water remaining on the tip of a probe, the remained droplets will come to be mixed in a sample to be examined awaiting the following measurement. This will have an influence on a reaction system and make it impossible to obtain accurate measurements. There may also happen a problem that droplets of reagents, which are adhered to the tip of a probe, enter into reaction liquid, resulting in a change in the amount of reagents to be used for reaction. In particular, as the amount of reaction liquid in an automatic analyzer becomes smaller and smaller these days, even to bring in a small amount of droplets has come to have a risk of badly affecting measurement result. Thus there still remains a problem that inconvenience caused by the droplets remained on a pipetting probe cannot be completely dissolved.

Further, as the processing speed of an automatic analyzer becomes faster and faster these days, there is a growing demand for shorter cycle time of pipetting. To meet such demand, there is proposed a method in which, every time a pipetting probe detects droplets, the probe is inserted into a washing tub capable of removing droplets to remove them. Such method, however, has a possibility of causing slower processing speed. Another method, in which a pipetting probe is moved down for a wash, has the same problem as the former one has.

JP 2005-241442 A discloses an automatic analyzer having a cleaning device for cleaning a probe by means of a cleaning liquid discharged from a plurality of supply ports provided in the cleaning device. The cleaning device also has means for drying the probe by blowing air to it. The precharacterising first part of the independent claims has been drafted with a view to this prior art.

### SUMMARY OF THE INVENTION

It is an object of the invention to provide an automatic analyzer which can achieve more effective cleaning and drying of its probes. This object is solved by the automatic analyzer set forth in the independent claims. The dependent claims relate to preferred embodiments of the invention.

Embodiments of the present invention is to provide an automatic analyzer that can effectively and efficiently remove the dirt from probes with the operation of probes kept minimized. At the same time, the automatic analyzer can remove droplets of samples and reagents as well as washing water remained on the tip of probes as much as possible. Thus it will be possible to solve the problem that droplets on the tip of probes get mixed into containers of samples to be examined, reaction cells, and containers of reagents, resulting in inaccurate measurements.

To solve the aforementioned problems, embodiments of the present invention have means as follows.

An automatic analyzer including one or more pipetting probes for pipetting reagents or samples to be examined, one or more pipetting-probe-transferring means for transferring the probes and one or more washing tubs installed on the transfer paths and having structure permitting the probes to pass therethrough, the washing tub having washing-water-discharging orifices for discharging washing water and air-jetting orifices for jetting out air.

One of other preferable device arrangement of the present invention is an automatic analyzer including a probe for discharging or sucking/discharging reagents or samples to be examined, a transfer-control means for controlling the transfer of the probe, and a washing tub installed on the passing path of the probe and having structure permitting the probe to pass therethrough. The washing tub has orifices shared for jetting out washing water therethrough and for jetting out air therethrough respectively at the probe that is passing through the tub under control of the transfer-control means and a switching mechanism for switching a means for feeding washing water and a means for feeding air in the middle of feeding pipes.

As for preferable construction of a washing tub, the washing tub may be so constructed as not to hinder the transfer of a probe, to enclose the probe with its block wall to the extent that the wall does not touch droplets adhered to the tip of the probe, and to keep a splash of liquid within the tub when the splash occurs by jetting out washing water or air at the probe from the position higher than the level where the washing water hits the probe.

As for a preferable washing mechanism, a plurality of washing-water-jetting orifices may be installed with them directed not only to the tip of a probe but also to the whole probe inclusive of the upper part thereof.

Also, as for a preferable mechanism for removing droplets by the jet of air, an air-jetting orifice may be situated at least higher than the horizontal direction with respect to the tip of a probe and the air-jetting orifice is directed to the tip of the probe.

Further, one of the most preferable device operation of the automatic analyzer having aforementioned construction according to the present invention is that, during the probe washing process, a probe has only to move horizontally and then halt before the jet of washing water starts. When the jet of washing water is over, droplets of washing water are removed from the probe by the jet of air. In addition to this process, while a probe passes through the washing tub after it has isolated a reagent or a sample to be examined, air is jetted out through an air-jetting orifice at the tip of the probe, thereby removing droplets there all the time. It would be preferable to provide a droplet-detecting sensor on the tip of a probe and jet out air thereat only when the sensor detects droplets to remove them.

Here, it should be noted that a pipetting probe according to the embodiments of the present invention is the one consisting of a canalicular nozzle and capable of sucking liquid into the nozzle by putting its inside under negative pressure. The nozzle is made of stainless steel, for example.

According to the present invention, a probe has only to move horizontally during the probe washing process, thereby helping increase washing speed. The invention also makes it possible to wash probes more powerfully than the washing way using natural flow of water by jetting out washing water. The present invention further makes it possible to remove not only washing water on probes but also droplets on the tip of probes for want of washing process by jetting out air. These droplets include ones of, for example, samples or reagents adhered to pipetting probes during the process of isolating samples or reagents. Thus the present invention can reduce the influence such adhered liquid to a probe has on measurements when it is brought into reaction liquid, samples to be examined, reagent containers and the like.

### BRIEF DESCRIPTION OF THE DRAWINGS

Embodiment (s) of the present invention will be described in detail based on the following figures, wherein:
Fig.1 is a layout drawing of an automatic analyzer according to the present invention;
Fig.2 is a schematic diagram showing the position of a washing tub according to the present invention;
Fig.3 is a perspective view and sectional views of a washing tub according to the present invention;
Fig.4 is a schematic diagram showing a washing-water-supplying system according to the present invention;
Fig. 5 is a schematic diagram showing washing procedure according to the present invention;
Fig. 6 is a schematic diagram showing droplet-removing procedure according to the present invention; and
Fig. 7 is a schematic diagram showing a related art.

### DETAILED DESCRIPTION OF THE INVENTION

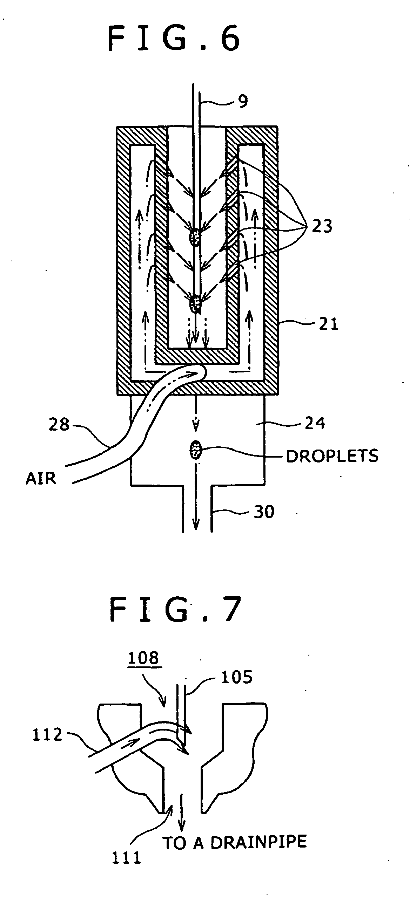

An operation for washing a reagent-pipetting probe in an automatic analyzer of the past will be described as an example with reference to the sectional view of the washing tub disposed between the sample disk and the reaction disk as illustrated in Figure 7. When a reagent-pipetting probe 105 moves down to a prescribed position in a washing tub 108 before it halts, washing water is supplied from an inside-the-probe-washing pump (not shown) into the probe 105 to wash its inside. At the same time as this, washing water is continuously poured from a washing water pipe 112, which is so disposed as to pierce the inner peripheral wall of the washing tub 108, on the tip of the probe 105 to wash its outside. After having washed the inside and outside of the probe 105, the washing water is drained through a drain outlet 111 at the bottom of the tub 108.

It should be noted that, while the supply of washing water for washing the inside and outside of a reagent-pipetting probe 105 is suspended upon the passage of prescribed time allocated for washing among a reagent-pipetting cycle, pouring of washing water on the outside of the probe 105 lasts until the probe 105 moves up before it leaves the washing tub 108. Thus the upward moving of the reagent-pipetting probe 105 and the flow of washing water that takes the opposite direction to the movement of the probe 105 combine to help reduce washing water remained on the outside of the probe 105.

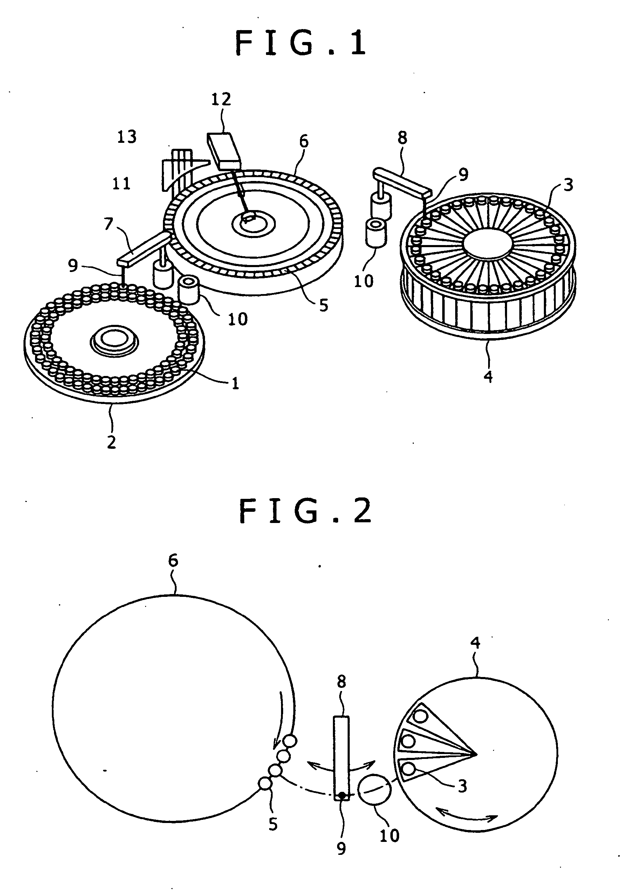

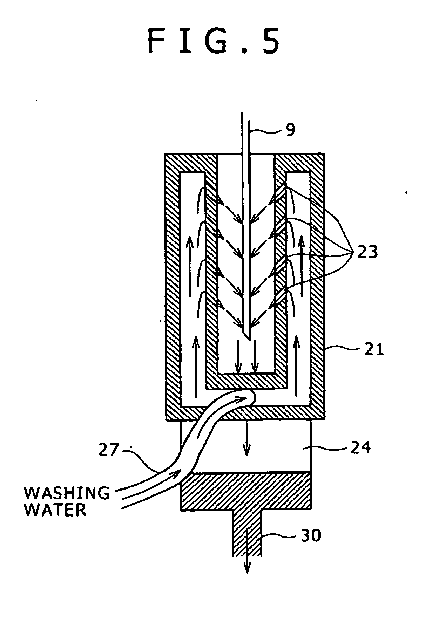

The inventors, as a result of making various examinations about the way of washing the tip of a probe in an automatic analyzer and removing droplets therefrom, have come up with the present invention as the most effective way of washing and removing droplets. Hereinafter, embodiments of the present invention will be described with reference to the following drawings. The present invention relates to improvements in an automatic analyzer in use mainly for a clinical examination. The invention is put into practice through the device arrangement illustrated in Figures 1-4 inclusive and the device operation illustrated in Figure 5. Hereinafter, the present invention will be described in detail with reference to Figures 1-4 inclusive. It should be understood that the invention may be applied to any structure that permits the washing of probes by jetting out washing water or the removal of droplets by jetting out air and is not limited to the embodiment that is to be described about in detail.

To begin with, Figure 1 is a perspective view of an embodiment showing minimum arrangement required for an automatic analyzer as an application of the present invention. The automatic analyzer has a sample disk 2, a reagent disk 4 and a reaction disk 6. The sample disk 2 is adapted to set therein sample containers 1 keeping samples to be examined. The reagent disk 4 holds a plurality of reagent containers 3 keeping reagents that react to various components in samples to be examined. The reaction disk 6 holds a plurality of reaction cells 5 arranged along its circumference. In addition, there are installed pipetting arms 7, 8 for pipetting samples or reagents between each of the disks. Each one of the arms 7, 8 has a pipetting probe 9 connected thereto. Further, there are installed washing tubs 10 for washing the pipetting probes 9 and removing droplets therefrom on each passing course of the probes 9. The details of the washing tub 10 will be made later with reference to Figures 2-4 inclusive.

The sample disk 2, reagent disk 4 and reaction disk 6 are respectively rotated by drive units. A reagent required for measurement is pipetted into one of the reaction cells 5 on the reaction disk 6 from one of the reagent containers 3 on the reagent disk 4 using the pipetting arm 8 and pipetting probe 9.

Also, a sample to be examined in one of the sample containers 1 on the sample disk 2 is pipetted into a reaction cell 5 on the reaction disk 6 using the pipetting arm 7 and pipetting probe 9. The reaction cell 5, into which a sample to be examined and a reagent have been pipetted, moves to an agitating station by the rotation of the reaction disk 6 to have the mixture of a sample to be examined and a reagent therein agitated by an agitating unit 11. Then a photometric system 12 analyzes components in the sample to be examined through the measurement of absorbance change in the mixture caused by irradiating light against the reaction cell 5 that has moved to a photometric measuring station. After the analysis is over, the mixture in the reaction cell 5 is scrapped and then the cell 5 is washed by a washing unit 11.

Although Figure 1 shows only a washing tub 10 among the whole arrangement for convenience sake, minimum requirements of the washing tub is that, as is illustrated in Figure 2, it should be placed on the passing course of a pipetting probe that needs washing or removal of droplets therefrom. In addition, Figure 2 shows just one embodiment with regard to position and shape of a washing tub and they are not limited to the embodiment illustrated in Figure 2. As for the position, for example, a washing tub has only to be placed on the passing course of a pipetting probe. As for the shape, on the other hand, the whole passing course of a pipetting probe can be a washing tub in order to ensure the removal of droplets.

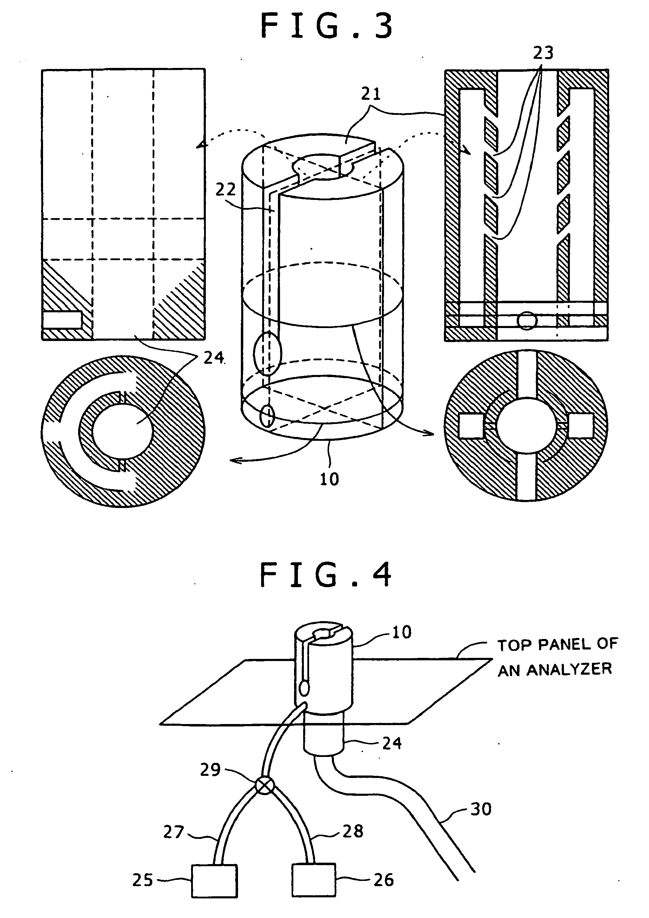

Hereinafter, the details will be made with reference to an embodiment illustrated in Figure 3 about a washing tub 10 designed to wash a pipetting probe and remove droplets on its tip. However, it goes without saying that, even if a plurality of pipetting probes are installed, the same washing tub as this may be installed for each one of the pipetting probes.

Figure 3 is a perspective view and a sectional view of a washing tub 10 for a pipetting probe as an embodiment of the present invention. As is illustrated in Figure 3, the washing tub 10 has at least a holding block 21 of the tub disposed on an automatic analyzer, a probe passageway 22, jetting orifices 23 for jetting out washing water and air at a pipetting probe therethrough and a drain outlet 24 for draining jetted washing water. The probe passageway 22 is so formed as to prevent a pipetting probe 9 and droplets on the probe from coming in contact with the holding block 21. However, minimum requirements of the washing tub are that it can jet out washing water and air at the tip of a probe without hindering the normal movement of the probe. So the shape of the washing tub is not limited to the one illustrated in Figure 3.

Further, as is illustrated in Figure 4, the washing tub 10 is equipped with a washing-water-feeding pipe 27 and an air-feeding pipe 28. They are connected at one end thereof with the tub and at the other end thereof with a washing-water-supplying pump 25 for supplying washing water and with an air-supplying pump 26 for supplying air respectively. While these pipes 27, 28 may be separately connected with the washing tub, they are preferably switched using a switching valve 29 for switching these pipes in the middle thereof. On the other hand, the washing tub 10 is equipped with a drain outlet 24 for draining washing water. The drain outlet 24 is connected with a drainpipe 30, through which washing water is drained.

The following paragraphs will describe one embodiment about the working of the present invention at the time of washing a pipetting probe and at the time of removing droplets from the probe by air with reference to Figures 5, 6. The working is just an embodiment of the present invention. Minimum requirements of the present invention are that a pipetting probe should move horizontally during the washing process, that the outside of the probe should be washed by jetting out washing water, and that droplets should be removed from the tip of the probe by jetting out air. The present invention, therefore, is not limited to the examples to be described.

On one hand, washing procedure of the present invention, which is illustrated in Figure 5, is as follows: When a reagent-pipetting probe 9 horizontally moves and halts at a prescribed position in a washing tub 10, washing water is supplied from an inside-the-probe-washing pump (not shown) into the probe 9 to wash its inside. At the same time as this, washing water, which has been fed through a washing-water-feeding pipe 27, is continuously jetted out through washing-water-jetting orifices 23, which are disposed on the inner peripheral wall of the washing tub 10 and have openings directed toward the tip of probe, at the tip of probe 9 to wash its outside up to a higher level. After having washed the inside and outside of the probe 9, the washing water goes down into a drain outlet 24 at the bottom of the washing tub 10 before it is drained through a drainpipe 30.

On the other hand, droplet-removing procedure of the present invention, which is illustrated in Figure 6, is as follows: When a reagent-pipetting probe 9 horizontally moves and passes through a prescribed position in a washing tub 10, air, which has been fed through an air-feeding pipe 28, is continuously jetted out through air-jetting orifices, which are disposed on the inner peripheral wall of the washing tub 10 and have openings directed toward the tip of the probe, at the tip of the probe 9 to remove droplets on its outside up to a higher level. After having been removed from the probe 9, the droplets go down into a drain outlet 24 at the bottom of the washing tub before it is discarded through a drainpipe 30.
It should be understood by those skilled in the art that various modifications, combinations, sub-combinations and alterations may occur depending on design requirements and other factors insofar as they are within the scope of the appended claims or the equivalents thereof.

## Claims

1. An automatic analyzer comprising:
a pipetting probe (9) for pipetting reagents or samples to be examined,
a pipetting-probe-transferring means (7, 8) for transferring the robe, and
a washing tub (10) installed on the transfer path of the probe and having a structure permitting the probe to pass through,
the washing tub having at least two washing-water-discharging orifices (23) for discharging washing water and at least two air-jetting orifices (23) for jetting out air, wherein the washing-water-discharging orifices and the air-jetting orifices in the washing tub are situated higher than the tip of the probe (9) at the time of its horizontal movement,
**characterised in that**
both the at least two washing-water-discharging orifices (23) and the at least two air-jetting orifices (23) are distributed in the vertical direction.

2. The automatic analyzer according to claim 1, wherein the jets of the washing water and air are directed toward the tip of the probe.

3. An automatic analyzer comprising:
a pipetting probe (9) for pipetting reagents or samples to be examined,
a pipetting-probe-transferring means (7, 8) for transferring the probe in the horizontal direction, and
at least two air-jetting orifices (23) installed on the transfer path of the probe, for jetting out air therethrough, wherein
the automatic analyzer further comprises an air-jet-control means which is so designed as to jet out air through the air-jetting orifices when the pipetting-probe-transferring means horizontally transfers the probe near the air-jetting orifices, and
the air-jetting orifices are situated higher than the tip of the probe (9) at the time of its horizontal movement,
**characterised in that**
the at least two air-jetting orifices (23) are distributed in the vertical direction.

4. The automatic analyzer according to claim 3, further comprising a detecting means for detecting that the probe is transferred near the air-jetting orifices.

5. The automatic analyzer according to claim 4, wherein the detecting means calculates a location based on the count information about the pulses of a drive motor for the pipetting-probe-transferring means.

6. An automatic analyzer according to any preceding claim, wherein said orifices (23) are orifices shared for jetting out washing water and for jetting out air, and a mechanism (29) is provided for discharging first water and then air from the orifices (23).

7. An automatic analyzer according to claim 6, wherein the mechanism (29) includes a switching valve connecting the orifices (23) alternatively to a washing-water-supplying pump (25) and an air-supplying pump (26).

## Patentansprüche

1. Automatischer Analysator aufweisend:
eine Pipettiersonde (9) zum Pipettieren von Reagenzien oder zu untersuchenden Proben,
eine Pipettiersonden-Fördereinrichtung (7, 8) zum Fördern der Sonde, und
eine auf dem Förderweg der Sonde eingerichtete Waschwanne (10) mit einem Aufbau, der den Durchtritt der Sonde erlaubt,
wobei die Waschwanne mindestens zwei Waschwasser-Abgabeöffnungen (23) zur Abgabe von Waschwasser und mindestens zwei Luftabstrahlöffnungen (23) zum Abstrahlen von Luft aufweist und die Waschwasser-Abgabeöffnungen und die Luftabstrahlöffnungen in der Waschwanne höher als die Spitze der Sonde (9) zur Zeit der horizontalen Bewegung der Sonde angeordnet sind,
**dadurch gekennzeichnet, dass**
sowohl die mindestens zwei Waschwasser-Abgabeöffnungen (23) als auch die mindestens zwei Luftabstrahlöffnungen (23) in Vertikalrichtung verteilt sind.

2. Analysator nach Anspruch 1, wobei die Waschwasser- und Luftstrahlen zur Spitze der Sonde hin gerichtet sind.

3. Automatischer Analysator aufweisend:
eine Pipettiersonde (9) zum Pipettieren von Reagenzien oder zu untersuchenden Proben,
eine Pipettiersonden-Fördereinrichtung (7, 8) zum Fördern der Sonde in horizontaler Richtung, und
mindestens zwei Luftabstrahlöffnungen (23), die auf dem Förderweg der Sonde angeordnet sind, um Luft durch sie hindurch abzustrahlen, wobei
der automatische Analysator außerdem eine Luftstrahl-Steuereinrichtung aufweist, die eingerichtet ist, Luft durch die Luftabstrahlöffnungen abzustrahlen, wenn die Pipettiersonden-Fördereinrichtung die Sonde in der Nähe der Luftabstrahlöffnungen horizontal fördert, und
die Luftabstrahlöffnungen höher als die Spitze der Sonde (9) zur Zeit der horizontalen Bewegung der Sonde angeordnet sind,
**dadurch gekennzeichnet, dass**
die mindestens zwei Luftabstrahlöffnungen (23) in vertikaler Richtung verteilt sind.

4. Analysator nach Anspruch 3 mit einer Erfassungseinrichtung um zu erfassen, dass die Probe in der Nähe der Luftabstrahlöffnungen gefördert wird.

5. Analysator nach Anspruch 4, wobei die Erfassungseinrichtung aufgrund von Zählinformationen über die Impulse eines Antriebsmotors für die Pipettierproben-Fördereinrichtung einen Ort berechnet.

6. Analysator nach einem der vorhergehenden Ansprüche, wobei die Öffnungen (23) zum Abstrahlen von Waschwasser und zum Abstrahlen von Luft gemeinsam genutzte Öffnungen sind und eine Einrichtung (29) vorgesehen ist, um zunächst Wasser und dann Luft aus den Öffnungen (23) abzugeben.

7. Analysator nach Anspruch 6, wobei die Einrichtung (29) ein Schaltventil enthält, das die Öffnungen (23) entweder mit einer Waschwasser-Förderpumpe (25) oder einer Luftförderpumpe (26) verbindet.

## Revendications

1. Analyseur automatique comportant :
une sonde de prélèvement par pipette (9) pour prélever à la pipette des réactifs ou des échantillons à examiner,
des moyens de transfert de sonde de prélèvement par pipette (7, 8) pour transférer la sonde, et
un baquet de lavage (10) installé sur le trajet de transfert de la sonde et ayant une structure permettant à la sonde de passer à travers,
le baquet de lavage ayant au moins deux orifices d'évacuation d'eau de lavage (23) pour évacuer l'eau de lavage et au moins deux orifices de jet d'air (23) pour évacuer l'air par jets, les orifices d'évacuation d'eau de lavage et les orifices de jet d'air dans le baquet de lavage étant situés plus hauts que l'embout de la sonde (9) au moment de son mouvement horizontal,
**caractérisé en ce que**
à la fois les au moins deux orifices d'évacuation d'eau de lavage (23) et les au moins deux orifices de jet d'air (23) sont répartis dans la direction verticale.

2. Analyseur automatique selon la revendication 1, dans lequel les jets d'eau de lavage et d'air sont dirigés vers l'embout de la sonde.

3. Analyseur automatique comportant :
une sonde de prélèvement par pipette (9) pour prélever à la pipette des réactifs ou des échantillons à examiner,
des moyens de transfert de sonde de prélèvement par pipette (7, 8) pour transférer la sonde dans la direction horizontale, et
au moins deux orifices de jet d'air (23) disposés sur le trajet de transfert de la sonde, pour évacuer l'air par jets à travers ceux-ci,
l'analyseur automatique comportant en outre des moyens de commande de jet d'air qui sont conçus de manière à évacuer l'air par jets à travers les orifices de jet d'air lorsque les moyens de transfert de sonde de prélèvement par pipette transfèrent horizontalement la sonde près des orifices de jet d'air, et
les orifices de jet d'air sont situés plus hauts que l'embout de la sonde (9) au moment de son mouvement horizontal,
**caractérisé en ce que**
les au moins deux orifices de jet d'air (23) sont répartis dans la direction verticale.

4. Analyseur automatique selon la revendication 3, comportant en outre des moyens de détection pour détecter que la sonde est transférée près des orifices de jet d'air.

5. Analyseur automatique selon la revendication 4, dans lequel les moyens de détection calculent un emplacement sur la base des informations de comptage concernant les impulsions d'un moteur d'entraînement pour les moyens de transfert de sonde de prélèvement par pipette.

6. Analyseur automatique selon l'une quelconque des revendications précédentes, dans lequel lesdits orifices (23) sont des orifices partagés pour évacuer l'eau de lavage par jets et pour évacuer l'air par jets, et un mécanisme (29) est prévu pour évacuer d'abord l'eau et ensuite l'air à partir des orifices (23).

7. Analyseur automatique selon la revendication 6, dans lequel le mécanisme (29) inclut une soupape de commutation reliant alternativement les orifices (23) à une pompe alimentation en eau de lavage (25) et à une pompe d'alimentation en air (26).
